# EUROPEAN PATENT SPECIFICATION

(11) **EP 1 961 093 B1**
(45) Date of publication and mention of the grant of the patent: **08.07.2015**
(21) Application number: 06824345.0
(22) Date of filing: 23.11.2006
(51) Int. Cl.: H02G 3/20

(54) **CEILING BOX**
DECKENKASTEN
BOITE DE PLAFOND

(30) Priority: 24.11.2005 NO 20055560
(43) Date of publication of application: 27.08.2008
(73) Proprietor: Schneider Electric Industries SAS, 92500 Rueil-Malmaison (FR)
(72) Inventor: JOHNSEN, Jan, K., N-4070 Randaberg (NO)
(74) Representative: Groth & Co. KB
(86) International application number: PCT/NO2006/000426
(87) International publication number: WO 2007/061316

(56) References cited:
- GB-A- 1 454 992
- US-A- 1 653 251
- US-A- 2 038 291
- US-A- 5 860 548
- US-B1- 6 207 894
- DATABASE WPI Week 200108, Derwent Publications Ltd., London, GB; Class X12, AN 2001-068122, XP003013333 & JP 2000 324651 A (NICHIDO DENKO KK) 24 November 2000

## Description

This invention relates to a ceiling box. More particularly, it relates to a ceiling box comprising at least one conduit entry and a fixture opening and mounting details for the mounting of a cover or a fixture, the internal cross-sectional area of the ceiling box being larger at the upper portion of the ceiling box than at the fixture opening.

Any directions indicated, for example up and down, refer to the orientation of the ceiling box in the position of use on the underside of a floor. This does not imply any restriction to the field of utilization of the ceiling box, which could just as well be a floor or wall.

When producing, for example, a floor of concrete, it is desirable to place ceiling boxes and intermediate conduits in the formwork before the floor is poured. Thereby the fitting of electrical installations is facilitated in that ceiling boxes and the inter-box conduit system are accessible as soon as the formwork is removed.

Gradually, it has become more common to use conduits in which electrical conductors have been pulled even before the conduits are cut and connected to boxes. The use of prewired conduits have turned out to be rational thereby and cost-effective.

Ceiling boxes of a known embodiment, as described in document GB-A-1454992, are provided with side openings for the insertion of conduits. When ceiling boxes of this kind are provided with a cover over their downward opening and perhaps are also secured to the formwork, it has turned out to be difficult to get prewired conduits, with wires projecting from the end portion of the conduit, inserted into the side opening. One of the reasons for this is that access to the interior of the ceiling box is difficult and that ordinary ceiling boxes have a relatively small internal volume.

The invention has as its object to remedy or reduce at least one of the drawbacks of the prior art.

The object is achieved in accordance with the invention through the features which are specified in the description below and in the claims that follow.

According to the invention, a ceiling box comprising at least one conduit entry and a fixture opening and mounting details for mounting a cover or a fixture may have an internal cross-sectional area of the ceiling box that is larger at the upper portion of the ceiling box than at the fixture opening. By the upper portion of the ceiling box is meant in this connection the part of the ceiling box which is formed with this larger internal cross-section.

The ceiling box may include a housing and a lid, the housing being provided with said mounting details, and the internal cross-sectional area of the housing being larger at the upper portion of the housing than at the lower portion of the housing.

The ceiling box according to the invention makes it possible for a substantially larger number of wires to be inserted into the ceiling box than in prior art ceiling boxes.

The ceiling box is characterised by having a parting plane between housing and lid and is located at the conduit entries which may be in the same plane or in different planes. Thereby the conduits can be placed in the part of the conduit entries which is within the housing, whereas the wires projecting from the conduits are placed in the housing.

After all the conduits have been placed in the housing, the lid is fitted over the housing. With advantage, the lid and housing are provided with snap locks of a kind known *per se* for interconnection.

With advantage, the conduit entries are formed with corrugations which are arranged to engage the corrugation of the conduit as the lid is attached to the housing. Further, it is advantageous that in the longitudinal direction the conduit entries are provided with successive, different diameters to receive conduits of different dimensions.

Ceiling boxes are often loaded with relatively heavy loads in their fixture mounts. Therefore, it has been important to find an adequate solution, in which the fixture mounts have been given sufficient strength.

In a preferred embodiment, see further explanation in the particular part of the specification, the fixture mounts have been given a bow shape and extend substantially in the full height of the housing.

During the casting-in, the ceiling box according to the invention is provided with a cover over its downward fixture opening. The cover is arranged to prevent concrete and any other material from entering the ceiling box before the cover is removed.

The invention has provided a ceiling box facilitating, to a substantial degree, by its shape and divided form the use of pre-wired conduits in cast floors.

In what follows is described a non-limiting example of a preferred embodiment which is visualized in the accompanying drawings, in which:

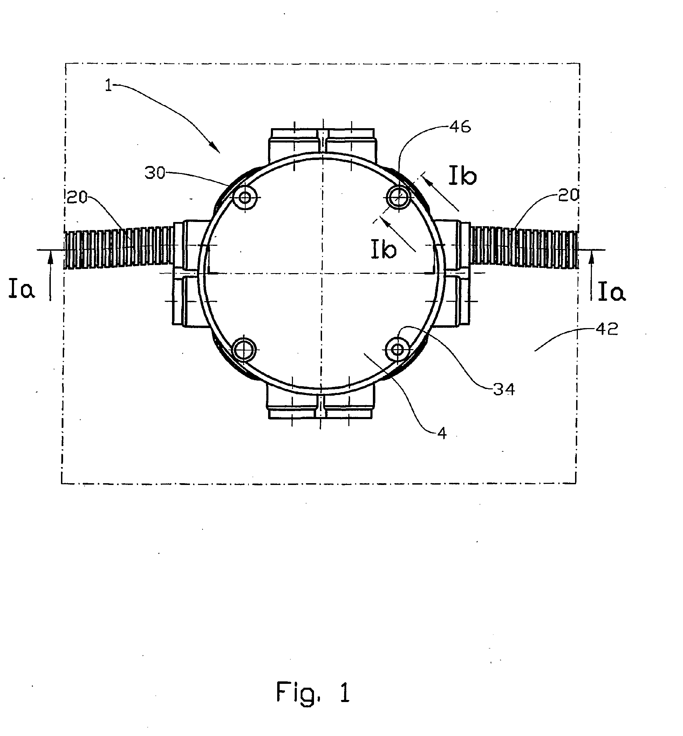

Figure 1 shows a plan view of a ceiling box in accordance with the invention prepared for concreting;

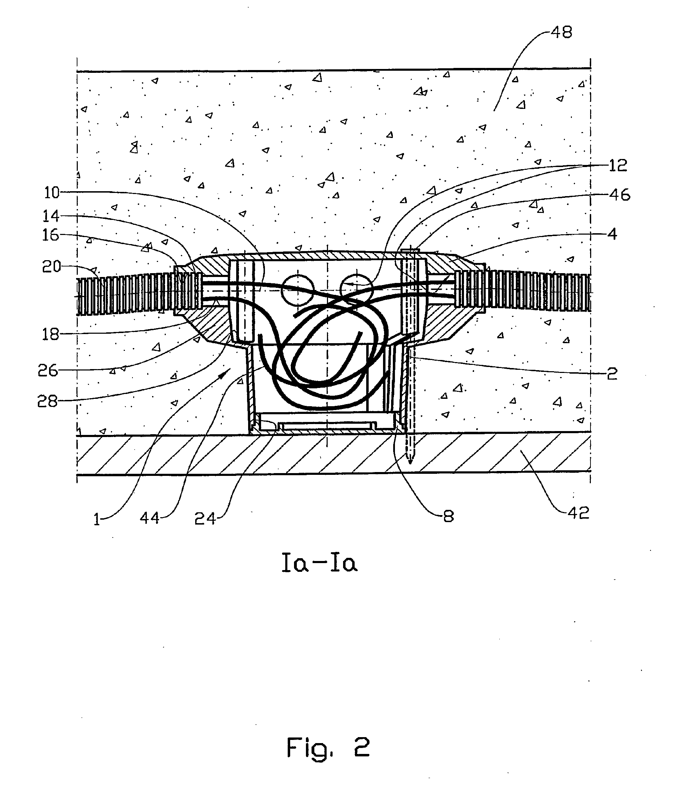

Figure 2 shows a section Ia-Ia of figure 1 after the ceiling box has been cast in;
Figure 3 shows in a perspective, exploded form the different parts of the ceiling box; and

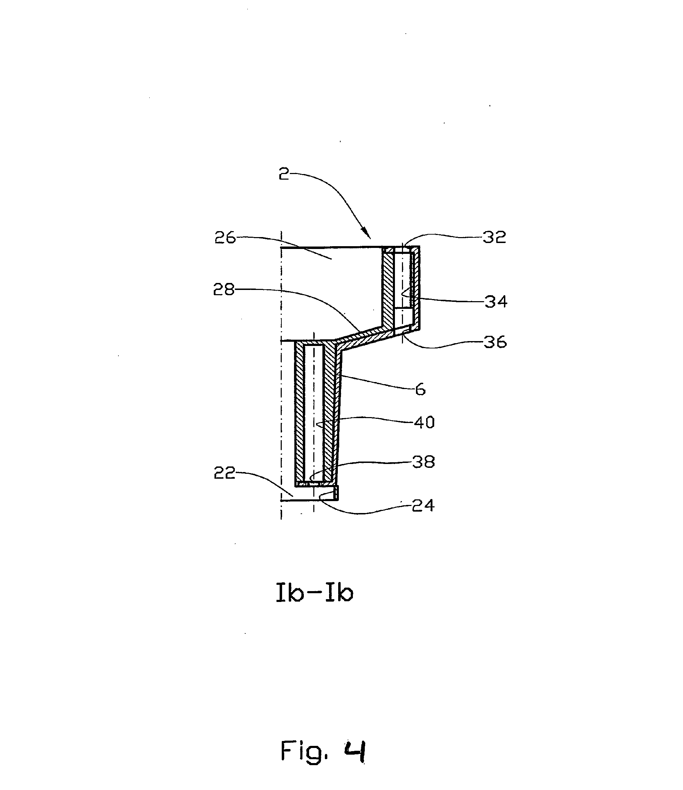

Figure 4 shows a section Ib-Ib of figure 1, the lid not being shown.

In the drawings the reference numeral 1 denotes a ceiling box comprising a housing 2, a lid 4, two fixture mounts 6 and a cover 8.

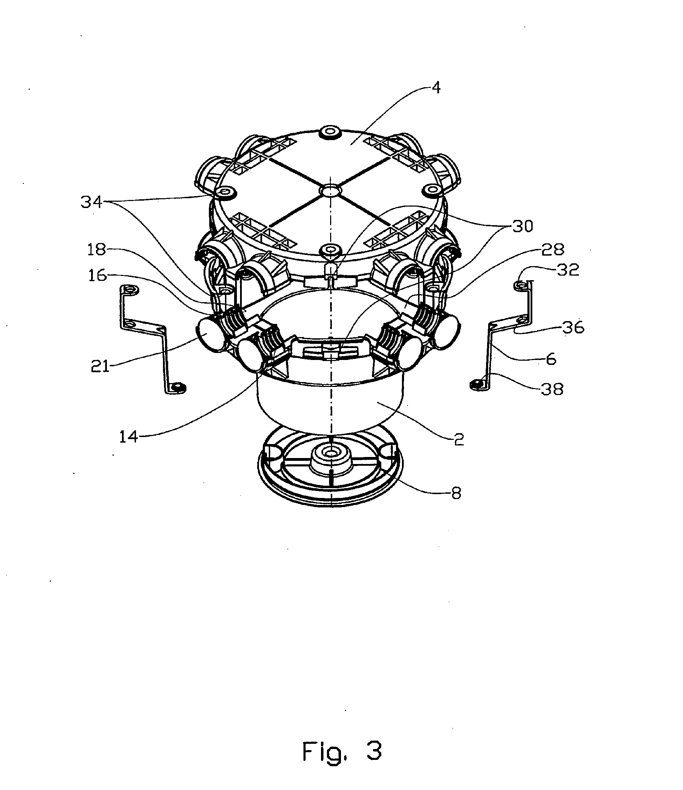

At their parting plane 10 the house 2 and lid 4 are provided with a number of, here eight, conduit entries 12. As best shown in Figure 3, the conduit entries 12 are formed with internal corrugations 14, and an outer portion 16 of one diameter and an inner portion 18 of a smaller diameter in order to sealingly receive conduits 20 of two different dimensions.
The conduit entries 12 are provided with breakable seals 21, see figure 3.

At its lower portion 22 the housing 2 of the ceiling box 1 is formed to receive a standardized fixture, not shown, or cover. The cover 8 sealingly covers the downward opening 24 of the lower portion 22 until such equipment is to be installed. The house 2 extends in a mainly cylindrical shape up towards its upper portion 26, in which the internal diameter of the housing 2 is increased so that in the transition between the lower portion 22 and upper portion 26 of the housing 2 there is formed an internal upward shoulder 28.

The internal diameter of the lid 4 corresponds to the internal diameter of the upper portion 26, and the lid 4 complementarily fits the upper portion 26 of the housing 26. A snap lock 30, see figure 3, is arranged to hold the housing 2 and lid 4 together during the pouring operation.

In this preferred embodiment the fixture mounts 6 extend along the exterior of the housing 2 from the lower portion 22 up beneath the shoulder 28 to the parting plane 10, where the fixture mounts 6 extend in between the housing 2 and the lid 4. A first through bore 32 corresponds to a substantially vertical through opening 34 of the housing 2 and lid 4. A second through bore 36 corresponds to the through opening 34 at the underside of the shoulder 28.

At its lower portion the fixture mount 6 is provided with a threaded bore 38. The threaded bore 38 corresponds to a mounting opening 40 extending upwards from the threaded bore 38 in the housing 2.

When the ceiling box 1 is to be installed, the housing 1 with the fixture mounts 6 and the cover 8 fitted therein is placed near its point of installation on a formwork 42. Then a suitable number of conduits are placed in their respective conduit entries 12, whereas the projecting wires 44 of the conduits are placed in the housing 2.

After the conduits 20 have been installed, the lid 4 is pressed onto the housing 2 and locked by means of the snap locks 30. Then two pins 46 are passed through respective through openings 34 in the lid 4 and the housing 2 and also through the first through bore 32 and the second through opening 36 of the fixture mount 6. Then, the pin 46 is secured to the formwork 42 to hold the ceiling box 1 in place during the pouring of concrete 48.

After the formwork 42 has been removed, the part of the pin 46 projecting down below the concrete 48 is broken off. The ceiling box 1 is thereby accessible from the underside of the concrete 48 for subsequent installation work, in which a fastening screw, not shown, which is screwed into the threaded bore 38 may extend into the mounting opening 40.

## Claims

1. A ceiling box (1) for embedding in concrete, the ceiling box (1) including at least one conduit entry (12) and a fixture opening (24), and where the ceiling box (1) includes a housing (2) and a lid (4) facing the concrete (48), **characterized in that** the housing (2) and lid (4) are divided in the at least one conduit entry (12).

2. The ceiling box in accordance with claim 1, **characterized in that** the internal cross-sectional area of the housing (2) is larger at the upper portion (26) of the housing (2) than at the lower portion (22) of the housing (2).

3. The ceiling box in accordance with claim 1, **characterized in that** the housing (2) and lid (4) are interlocked in their position of use by means of a snap lock (30).

4. The ceiling box in accordance with claim 1, **characterized in that** the ceiling box (1) includes at least one fixture mount (6) for the mounting of a cover (8) or a fixture.

5. The ceiling box in accordance with claim 4, **characterized in that** the fixture mount (6) has been given a bow shape and extends substantially in the full height of the housing (2), one end portion of the fixture mount (6), which is provided with a threaded opening (38), being placed in the fixture opening (24), the opposite end portion of the fixture mount (6) being between the housing (2) and the lid (4).

6. The device in accordance with claim 5, **charac**- **terized in** that a through opening (34) of the housing (2) and lid (4) corresponds to a first through bore (32) of the fixture mount (6).

## Patentansprüche

1. Deckenkasten (1) zum Einbetten in Beton, wobei der Deckenkasten (1) mindestens eine Leitungseinführung (12) und eine Vorrichtungsöffnung (24) beinhaltet, und wobei der Deckenkasten (1) ein Gehäuse (2) und einen dem Beton (48) zugewandten Deckel (4) beinhaltet, **dadurch gekennzeichnet, dass** das Gehäuse (2) und der Deckel (4) durch die mindestens eine Leitungseinführung (12) aufgeteilt sind.

2. Deckenkasten nach Anspruch 1, **dadurch gekennzeichnet, dass** die interne Querschnittsfläche des Gehäuses (2) am oberen Abschnitt (26) des Gehäuses (2) größer als am unteren Abschnitt (22) des Gehäuses (2) ist.

3. Deckenkasten nach Anspruch 1, **dadurch gekennzeichnet, dass** das Gehäuse (2) und der Deckel (4) in ihrer Gebrauchsposition mittels eines Schnappverschlusses (30) verriegelt sind.

4. Deckenkasten nach Anspruch 1, **dadurch gekennzeichnet, dass** der Deckenkasten (1) mindestens eine Vorrichtungshalterung (6) für die Montage einer Abdeckung (8) oder einer Vorrichtung beinhaltet.

5. Deckenkasten nach Anspruch 4, **dadurch gekennzeichnet, dass** die Vorrichtungshalterung (6) eine gebogene Form aufweist und sich im Wesentlichen in der vollen Höhe des Gehäuses (2) erstreckt, wobei ein Endabschnitt der Vorrichtungshalterung (6), der mit einer Gewindeöffnung (38) versehen ist, in der Vorrichtungsöffnung (24) platziert ist und sich der gegenüberliegende Endabschnitt der Vorrichtungshalterung (6) zwischen dem Gehäuse (2) und dem Deckel (4) befindet.

6. Vorrichtung nach Anspruch 5, **dadurch gekennzeichnet, dass** eine durchgehende Öffnung (34) des Gehäuses (2) und des Deckels (4) einer ersten durchgehenden Bohrung (32) der Vorrichtungshalterung (6) entspricht.

## Revendications

1. Boîte de plafond (1) destinée à être encastrée dans du béton, la boîte de plafond (1) comportant au moins une entrée de conduit (12) et une ouverture pour éléments (24), la boîte de plafond (1) comportant un boîtier (2) et un couvercle (4) faisant face au béton (48), **caractérisée en ce que** le boîtier (2) et le couvercle (4) sont divisés par l'au moins une entrée de conduit (12).

2. Boîte de plafond selon la revendication 1, **caractérisée en ce que** la surface en section transversale interne du boîtier (2) est plus grande au niveau de la portion supérieure (26) du boîtier (2) qu'au niveau de la portion inférieure (22) du boîtier (2).

3. Boîte de plafond selon la revendication 1, **caractérisée en ce que** le boîtier (2) et le couvercle (4) sont emboîtés dans leur position d'utilisation au moyen d'un verrouillage par encliquetage (30).

4. Boîte de plafond selon la revendication 1, **caractérisée en ce que** la boîte de plafond (1) comporte au moins une fixation pour éléments (6) pour le montage d'un recouvrement (8) ou d'un élément.

5. Boîte de plafond selon la revendication 4, **caractérisée en ce que** la fixation pour éléments (6) a une forme cintrée et s'étend substantiellement sur toute la hauteur du boîtier (2), une portion d'extrémité de la fixation pour éléments (6), qui est pourvue d'une ouverture filetée (38), étant placée dans l'ouverture pour éléments (24), la portion d'extrémité opposée de la fixation pour éléments (6) étant comprise entre le boîtier (2) et le couvercle (4).

6. Dispositif selon la revendication 5, **caractérisé en ce qu'**une ouverture traversante (34) du boîtier (2) et du couvercle (4) correspond à un premier alésage traversant (32) de la fixation pour éléments (6).
